# EUROPÄISCHE PATENTSCHRIFT

(11) **EP 0 944 540 B1**
(45) Veröffentlichungstag und Bekanntmachung des Hinweises auf die Patenterteilung: **03.04.2002**
(21) Anmeldenummer: 97953712.3
(22) Anmeldetag: 28.11.1997
(51) Int. Cl.: B65G 15/30, B65G 15/00, B65G 17/08

(54) **FÖRDEREINRICHTUNG**
CONVEYOR DEVICE
DISPOSITIF DE TRANSPORT

(30) Priorität: 30.11.1996 DE 19649746
(43) Veröffentlichungstag der Anmeldung: 29.09.1999
(73) Patentinhaber: Communication Belt Werbeflächen GmbH, 50672 Köln (DE)
(72) Erfinder: MOHR, Werner, 50765 Köln (DE)
(74) Vertreter: Wanischeck-Bergmann, Axel, Dipl.-Ing.
(86) Internationale Anmeldenummer: EP9706649
(87) Internationale Veröffentlichungsnummer: WO9824713

(56) Entgegenhaltungen:
- WO-A-94/14689
- US-A- 5 176 239
- US-A- 5 244 080
- US-A- 5 358 094

## Beschreibung

Die Erfindung betrifft eine Fördereinrichtung, bestehend aus einem angetriebenen Förderband, welches eine Vielzahl von einzelnen, miteinander mittelbar oder unmittelbar verbundenen Förderbandsegmenten, eine Antriebseinrichtung, insbesondere einen Antriebsmotor mit nachgeschaltetem Getriebe aufweist, welche Förderbandsegmente optische Informationen aufweisen, wobei die Förderbandsegmente mehrteilig ausgebildet sind und zumindest ein Teil des Förderbandsegmentes die optische Information enthält, jedes Förderbandsegment aus einem Tragteil und einem transparenten Abdeckteil besteht und die optische Information zwischen dem Tragteil und dem Abdeckteil angeordnet ist.

Aus der DE 84 30 410.3 U1 ist bereits ein Flughafen-Förderband zum Gepäcktransport in einen Gepäckabholraum bekannt, welches Förderband ein umlaufendes, insbesondere gelenkgliederartiges Transportband aufweist, dessen Tragplatten auf der Tragplattenoberseite mit Folien zur Anordnung und Vermittlung von Informationsinhalten versehen sind. Diese Folien sind mit den Tragplatten verklebt.

Weiterhin ist aus der US 5 165 526 ein Flughafen-Förderband bekannt, das ebenfalls aus einer Vielzahl von einzelnen, miteinander mittelbar oder unmittelbar verbundenen Förderbandsegmenten besteht, die angetrieben sind. Jedes Förderbandsegment weist eine dünne Folie mit visuellen Informationen auf, die bodenseitig an den durchsichtigen Förderbandsegmenten angeordnet sind. Die Förderbandsegmente sind hierbei auf eine Unterkonstruktion geschraubt, so daß zum Auswechseln der optischen Informationen die Gesamtheit der mit optischen Informationen versehenen Förderbandsegmente demontiert werden muß. Es ist somit bei dieser vorbekannten Fördereinrichtung nachteilig, daß die optische Information zwischen einer Trageinrichtung und den Förderbandsegmenten, die auf die Trageinrichtung montiert sind, angeordnet sind.

Eine ähnliche Fördereinrichtung ist darüber hinaus aus der WO 93/03472 bekannt, bei der auf den Förderbandsegmenten Folien aufgeklebt werden, die anschließend mit einer transparenten Folie oder mit transparenten Platten abgedeckt werden, wobei hier der wesentliche Nachteil besteht, daß das Auswechseln von visuellen Informationen sehr arbeits- und kostenintensiv ist, da das Entfernen der Klarsichtfolien bzw. der Folien mit den visuellen Informationen lange Stillstandszeiten der Fördereinrichtung nach sich zieht. Im übrigen besteht bei der Anordnung von aufgeklebten Folien auf den Förderbandsegmenten das Problem, daß diese Folien durch die auf das Band aufrutschenden Gepäckstücke sehr schnell zerkratzt und zerstört werden, so daß die visuellen Informationen nach kurzer Zeit nicht mehr vollständig oder überhaupt nicht mehr wahrnehmbar sind. Die Werbewirkung geht somit bei dieser Vorgehensweise sehr schnell verloren.

Eine gattungsgemäße Fördereinrichtung ist darüber hinaus aus der WO 94/14689 bekannt. Diese Fördereinrichtung besteht aus einem angetriebenen Förderband, welches eine Vielzahl von einzelnen miteinander verbundenen Förderbandsegmenten sowie eine Antriebseinrichtung aufweist. Die Förderbandsegmente sind mehrteilig ausgebildet und tragen eine optische Information. Jedes Förderbandsegment besteht aus einem Tragteil und einem transparenten Abdeckteil, wobei die optische Information zwischen dem Tragteil und dem Abdeckteil angeordnet ist.

Darüber hinaus ist aus der US-A-5 176 239 eine Rolltreppe bzw. ein Rollsteg bekannt. Derartige Einrichtungen sind zur Überwindung von Höhendifferenzen bzw. Strecken vorgesehen, wobei derartige Einrichtungen dem Transport von Personen dienen. Bekanntermaßen bestehen derartige Einrichtungen aus einzelnen Treppenelementen aus Metall, die im Querschnitt eine dreieckförmige Ausgestaltung aufweisen und eine Standfläche sowie eine Frontfläche haben, die jeweils die Katheten des Dreiecks bilden. Die Hypotenuse dieses Dreiecks ist als Versteifungssteg ausgebildet. Gemäß dieser Druckschrift ist es bekannt, zumindest einen Teil der Frontfläche derart zu bearbeiten, daß eine ebene Fläche entsteht, auf die ein Informationsträger und eine Abdeckplatte aufgebracht werden, wobei die Abdeckplatte wiederum die Perforierung der Frontfläche aufnimmt, aber transparent ausgebildet ist, so daß der Informationsträger durch die Abdeckplatte im wesentlichen sichtbar ist.

Ausgehend von diesem Stand der Technik liegt der Erfindung die **Aufgabe** zugrunde, eine gattungsgemäße Fördereinrichtung derart weiterzubilden, daß in einfacher Weise optische Informationen angeordnet werden können, die zumindest über einen bestimmten Zeitraum unbeschädigt bleiben und die leicht auswechselbar sind, wobei die optischen Informationen in einfacher Weise an bereits bestehenden Fördereinrichtungen angeordnet werden können.

Die **Lösung** dieser Aufgabenstellung sieht vor, daß das Abdeckteil mit der optischen Information in einer Ausnehmung, insbesondere einer Vertiefung im Tragteil angeordnet ist, welche Ausnehmung, insbesondere Vertiefung an allen Kanten des Abdeckteils anschließt und daß die Oberfläche des Abdeckteils geringfügig unterhalb einer durch die Randbereiche des Tragteils definierten Oberflächenebene angeordnet ist.

Bei der erfindungsgemäßen Fördereinrichtung wird insbesondere der Vorteil erzielt, daß die optische Information in jedem Förderbandsegment über einen langen Zeitraum unbeschädigt bleibt, so daß sie auch lange wahrnehmbar ist. Darüber hinaus ist eine einfache und damit kostengünstige Möglichkeit der Anordnung der optischen Information an jedem Förderbandsegment möglich, wobei insbesondere auch der Vorteil erzielt wird, daß bereits bestehende Fördereinrichtungen mit den hier in Rede stehenden optischen Informationen versehen werden können.

Beispielsweise kann die optische Information auf die aus einem flexiblen Kunststoff bestehenden Förderbandsegmente aufvulkanisiert sein. Alternativ ist vorgesehen, daß die optischen Informationen in die Förderbandsegmente eingraviert, eingeätzt, erodiert oder in sonstiger Weise spanabhebend eingearbeitet sind. Hierbei kommen sowohl Förderbandsegmente aus flexiblem Kunststoff als auch Förderbandsegmente aus Metall infrage. Die optische Information kann anschließend durch das Einbringen von Farbpartikeln in die spanabhebend gebildeten Ausnehmungen und Vertiefungen visuell hervorgehoben werden.

Die Erfindung sieht vor, daß die Förderbandsegmente mehrteilig ausgebildet sind, wobei zumindest ein Teil des Förderbandsegments die optische Information enthält. Durch diese Ausgestaltung kann das die optische Information enthaltende Teil der Förderbandsegmente leicht ausgetauscht werden, ohne daß eine vollständige Demontage der Förderbandsegmente von der Fördereinrichtung notwendig ist.

Hierbei besteht jedes Förderbandsegment aus einem mit zumindest einem Antriebselement verbundenen Tragteil und einem transparenten Abdeckteil, wobei die optische Information zwischen dem Tragteil und dem Abdeckteil angeordnet ist und wobei das Abdeckteil mit der optischen Information in eine Ausnehmung, insbesondere Vertiefung im Tragteil angeordnet ist. Das die optische Information abdeckende Abdeckteil schützt somit die optische Information vor Beschädigungen, wobei durch die Anordnung des Abdeckteils in eine Ausnehmung des Tragteils auch das Abdeckteil, das beispielsweise aus einem transparenten Kunststoff, wie Plexiglas besteht, vor Beschädigungen und Zerstörungen geschützt ist. Hierbei ist zu bedenken, daß mit derartigen Fördereinrichtungen eine Vielzahl von Gepäckstücken gefördert werden, die mitunter scharfkantig ausgebildet sind, so daß die scharfen Kanten derartiger Gepäckstücke eine besondere Gefahr für das Abdeckteil bzw. die optische Information darstellen können.

Es ist bei der Erfindung vorgesehen, daß die Vertiefung an allen Kanten des Abdeckteils anschließt. Das Abdeckteil ist somit vollständig in das Tragteil integriert. Hierbei ist das Tragteil vorzugsweise das an sich übliche Förderbandsegment, welches sowohl rechteckig als auch sichelförmig ausgebildet, aus Metall oder Kunststoff bestehen kann. In dieses Förderbandsegment ist die Vertiefung eingelassen, die der Aufnahme des Abdeckteils und der optischen Information dient. Das Abdeckteil ist somit von oben, d. h. von der Oberfläche der Förderbandsegmente zugänglich, so daß das Abdeckteil problemlos demontierbar ist, um beispielsweise die optischen Informationen auszutauschen. Diese optischen Informationen sind vorzugsweise auf einer Folie oder einer sehr dünnen Platte angeordnet, so daß bei bestehenden Fördereinrichtungen das Förderband aus den Förderbandsegmenten nicht ausgetauscht werden muß. Insgesamt haben das Abdeckteil und die optische Information nur eine geringe Materialstärke, die deutlich geringer ist als die Materialstärke üblicher Förderbandsegmente, so daß die Tragfähigkeit der Förderbandsegmente im wesentlichen durch das Einbringen der Vertiefung nicht beeinträchtigt wird.

Bei der Erfindung ist ferner vorgesehen,
daß die Oberfläche des Abdeckteils geringfügig unterhalb einer durch die Randbereiche des Tragteils definierten Oberflächenebene angeordnet ist. Hierdurch wird insbesondere der Vorteil erzielt, daß auf das Förderband aufrutschende Gepäckstücke nur in Teilbereichen mit der Oberfläche der Abdeckteile in Kontakt treten. In der Regel liegen die Gepäckstücke auf den Randbereichen des Tragteils auf und treten nicht in Berührung mit der Oberfläche der Abdeckteile, so daß insbesondere beim Aufrutschen der Gepäckstücke auf das Förderband Beschädigungen, beispielsweise in Form von Verkratzungen der transparenten Abdeckteile vermieden werden.

Zur Erleichterung der Montage der optischen Informationen an der Fördereinrichtung, insbesondere beim Austausch der optischen Informationen nach einem Werbezyklus, ist vorgesehen, daß die optische Information an der dem Tragteil zugewandten Fläche des Abdeckteils angeordnet ist. Hierbei kann mit einem Arbeitsschritt das Abdeckteil vom Tragteil entfernt werden, wobei gleichzeitig die optische Information entfernt wird, so daß das Auswechseln der Abdeckteile auch ein Auswechseln der optischen Informationen darstellt. Hierdurch werden die Stillstandszeiten derartiger Fördereinrichtungen beim Einrichten der optischen Informationen auf dem Förderband wesentlich reduziert.

Die optische Information kann beispielsweise in Form eines Farbauftrags auf das Abdeckteil aufgebracht sein. Hierbei hat es sich als besonders vorteilhaft erwiesen, die optische Information auf das Abdeckteil zu drucken. Bei dieser Ausgestaltung ist es vorteilhaft, daß zwischen Abdeckteil und optischer Information keine Feuchtigkeit und / oder keine Verschmutzungen gelangen können, die die visuelle Wahrnehmbarkeit der optischen Information beeinträchtigen. Darüberhinaus wird hierdurch die Montage vereinfacht, da eine Relativbewegung zwischen der optischen Information und dem Abdeckteil bei der Montage nicht möglich ist. Es wird somit immer ein sehr genaues Ergebnis erzielt, was insbesondere im Hinblick auf den visuellen Eindruck von optischen Informationen wichtig ist, die sich über mehrere Tragteile des Förderbandes erstrecken. Diese Ausgestaltung reduziert darüberhinaus die Anzahl der zu handhabenden Einzelteile bei der Erstmontage und jeder weiteren Wartung bzw. Überarbeitung der erfindungsgemäßen Fördereinrichtung.

Vorzugsweise ist das Abdeckteil lösbar am Tragteil befestigt, so daß ein Austausch der Abdeckteile die Demontage der Tragteile von der Fördereinrichtung nicht erfordert. Zur Befestigung der Abdeckteile am Tragteil haben sich als Befestigungsmittel Schrauben und / oder Nieten als vorteilhaft erwiesen.

Es hat sich darüberhinaus als vorteilhaft erwiesen, das Abdeckteil mit dem Tragteil lösbar zu verkleben. Die Verklebetechnik hat hierbei den Vorteil, daß ein ausreichend fester Verband zwischen dem Abdeckteil und dem Tragteil geschaffen wird, wobei der zu verwendende Kleber jedoch rückstandsfrei bei der Demontage des Abdeckteils vom Tragteil entfernt werden muß. Hierzu eignen sich insbesondere Kleber, die beispielsweise bei Wärmeeinwirkung erweichen, um ein Lösen des mit dem Tragteil verklebten Abdeckteils zu ermöglichen.

Vorzugsweise erfolgt die Verklebung zwischen dem Abdeckteil und dem Tragteil in Teilbereichen, insbesondere im Randbereich und / oder punktförmig. Bei dieser Ausgestaltung hat es sich als vorteilhaft herausgestellt, daß das Abtrennen des Abdeckteils von dem Tragteil bei nur partieller Verklebung dieser beiden Teile vereinfacht wird. Hierbei sollte die Verklebung in einem Bereich erfolgen, der im Regelfall den höchsten Belastungen ausgesetzt ist. Dieser Bereich befindet sich am Rande des Abdeckteils bzw. an den Innenrändern der Ausnehmung. Dieser Randbereich kann entweder linienförmig oder punktförmig mit einem Kleber versehen werden, der eine lösbare Verklebung zwischen dem Abdeckteil und dem Tragteil ermöglicht. Es sind aber auch andere Klebeflächen denkbar, beispielsweise diagonal verlaufende Klebelinien.

Um eine möglichst große Werbefläche bereitzustellen, ist es vorteilhaft, die auf einer Folie oder Platte angeordnete optische Information flächengleich mit dem Abdeckteil auszubilden.

Schließlich hat es sich noch als vorteilhaft erwiesen, einzelne oder jedes Förderbandsegment mit mehreren optischen Informationen auszubilden. Demnach besteht die Möglichkeit, daß ein Förderbandsegment nicht nur eine Vertiefung oder Ausnehmung aufweist, in welche ein Abdeckteil eingesetzt wird, sondern daß das Förderbandsegment mehrere unterschiedliche Ausnehmungen hat, in die entsprechend ausgebildete Abdeckteile mit entsprechenden optischen Informationen einsetzbar sind. Hierdurch können den Werbetreibenden Unternehmungen auch kleinere Abschnitte der Werbefläche zur Verfügung gestellt werden.

Weitere Merkmale und Vorteile der erfindungsgemäßen Fördereinrichtung ergeben sich aus der nachfolgenden Beschreibung der zugehörigen Zeichnung, die bevorzugte Ausführungsformen der Fördereinrichtung zeigt.

In der Zeichnung zeigen:
- Fig. 1: ein Gepäckförderband im Bereich eines Flughafens in einer Draufsicht;
- Fig. 2: ein Förderbandsegment eines Förderbandes in Draufsicht;
- Fig. 3: eine weitere Ausgestaltung eines Förderbandsegmentes eines Förderbandes in Draufsicht;
- Fig. 4: das Förderbandsegment gemäß Fig. 3 in einer entlang der Linie IV-IV in Fig. 3 geschnittenen Seitenansicht und
- Fig. 5: eine weitere Ausführungsform des Förderbandsegmentes gemäß den Fig. 2 bis 4.

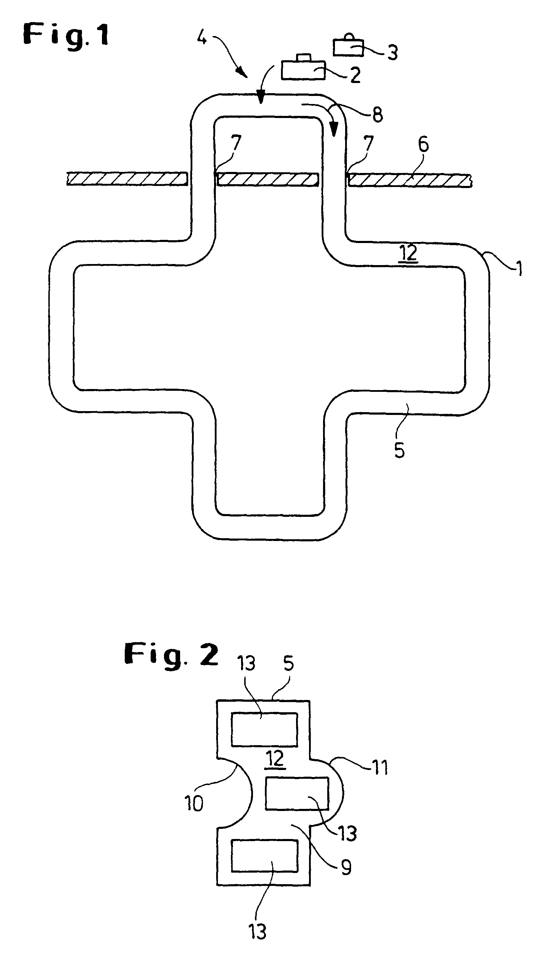

In Fig. 1 ist eine Fördereinrichtung 1 für den Transport von Gepäckstücken 2, 3 dargestellt, die im Bereich einer Aufgabestelle 4 auf ein Förderband 5 aufgegeben werden. Hierbei handelt es sich um Gepäckstücke 2, 3, die einem Flugzeugladeraum entnommen und mit einem Motorfahrzeug zur Aufgabestelle 4 transportiert werden. Die Aufgabestelle 4 ist hierbei außerhalb eines durch einen Mauerabschnitt 6 angedeuteten Gebäudes angeordnet.

Der Mauerabschnitt 6 weist zwei Öffnungen 7 auf, durch welche die Fördereinrichtung 1 geführt ist, deren Förderband 5 konstant in Richtung des Pfeils 8 bewegt wird.

Das Förderband 5 besteht aus einzelnen in den Fig. 2 bis 4 dargestellten, plattenförmigen Förderbandsegmenten 9. Diese Förderbandsegmente 9 können unterschiedlicher Ausgestaltung sein und aus Kunststoff oder Metall bestehen. Eine Vielzahl dieser plattenförmigen Förderbandsegmente 9 ist gelenkig miteinander verbunden und bildet in der Art ein zumindest beschränkt kurvengängiges Förderband 5.

In der Fig. 2 ist ein Förderbandsegment 9 dargestellt, das im wesentlichen rechteckförmig ausgebildet ist und an einer Längskante eine halbkreisförmige Ausnehmung 10 und an der gegenüberliegenden Längskante einen halbkreisförmigen Vorsprung 11 hat.

Das Förderband 5 hat eine Gepäckauflagefläche 12, auf welche die Gepäckstücke 2, 3 im Bereich der Aufgabestelle 4 aufgesetzt werden. Innerhalb des Gebäudes, d. h. nachdem die Gepäckstücke 2, 3 durch die Öffnung 7 gefördert wurden, besteht für die Fluggäste die Möglichkeit, ihr Gepäckstück 2, 3 von der Fördereinrichtung 1 zu entnehmen. In der Regel ist hierbei zu beobachten, daß die Fluggäste eine bestimmte Zeit an der Fördereinrichtung 1 warten müssen, bis die Fördereinrichtung 1 anläuft, d. h. bis sich das Förderband 5 bewegt und die Gepäckstücke 2, 3 in das Gebäude befördert werden.

Die Gepäckauflagefläche 12, welche die Oberfläche der einzelnen Förderbandsegmente 9 darstellt, weist optische Informationen auf, die integraler Bestandteil der Förderbandsegmente 9 sind, wobei die optischen Informationen als abgeschlossene Einheit auf jeweils einem Förderbandsegment 9 beschränkt sind oder mehrere Förderbandsegmente 9 übergreifen. In der Fig. 2 ist eine Ausführungsform eines Förderbandsegmentes 9 dargestellt, die drei optische Informationen in Form von Präsentationsflächen 13 hat, wobei die optischen Informationen auf die Gepäckauflagefläche 12, d. h. die Oberfläche des Förderbandsegmentes 9 vulkanisiert sind. Diese Vorgehensweise bietet sich bei Förderbandsegmenten 9 aus einem flexiblen Kunststoff an. Alternativ kann aber vorgesehen sein, daß die optischen Informationen in die Förderbandsegmente 9 eingraviert, eingeätzt, erodiert oder in sonstiger Weise spanabhebend eingearbeitet sind.

Von besonderer Bedeutung ist hierbei, daß die optischen Informationen integraler Bestandteil eines jeden Förderbandsegmentes 9 sind, so daß eine Beschädigung oder Zerstörung der optischen Informationen durch die aufgestellten oder aufrutschenden Gepäckstücke 2, 3 vermieden wird.

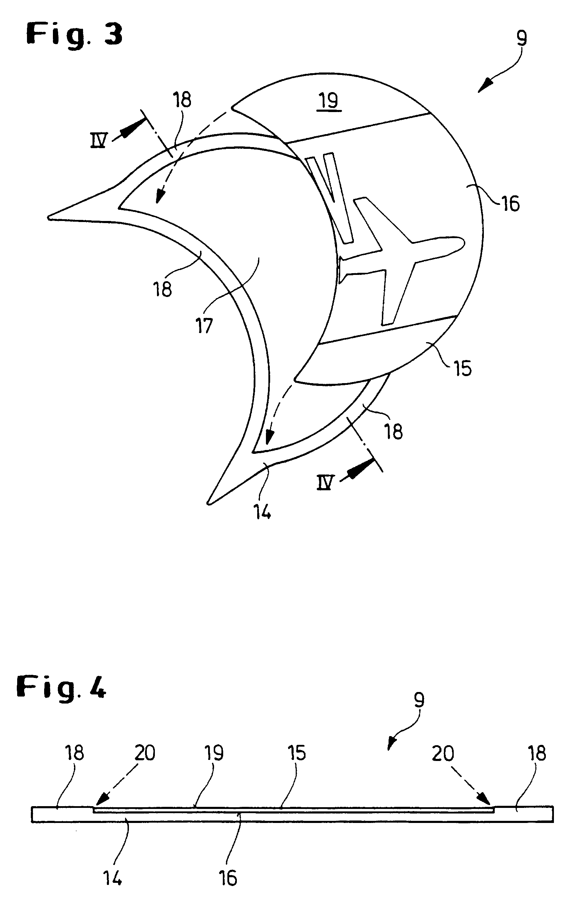

In den Fig. 3 bis 5 sind alternative Ausgestaltungen eines Förderbandsegmentes 9 dargestellt.

Fig. 3 zeigt ein solches Förderbandsegment 9, das eine sichelförmige Außenkontur hat. Dieses Förderbandsegment 9 besteht aus einem Tragteil 14 und einem transparenten Abdeckteil 15, wobei die als eine Folie 16 ausgebildete optische Information auf der dem Tragteil 14 zugewandten Fläche des Abdeckteils 15 angeordnet ist, so daß sich die optische Information zwischen dem Tragteil 14 und dem Abdeckteil 15 befindet.

Zur Aufnahme des Abdeckteils 15 weist das Tragteil 14 eine Vertiefung 17 auf, deren Außenkontur mit der Außenkontur des Abdeckteils 15 übereinstimmt. Die Vertiefung 17 nimmt das Abdeckteil 15 zwischen allseitig des Abdeckteils 15 umlaufenden Rändern 18 derart auf, daß das Abdeckteil 15 vollständig innerhalb der Vertiefung 17 des Tragteils 14 angeordnet ist.

In der Fig. 4 ist zu erkennen, daß die Oberfläche 19 des Abdeckteils 15 geringfügig unterhalb einer durch die Ränder 18 des Tragteils 14 definierten Oberflächenebene angeordnet ist. Es besteht somit zwischen den Rändern 18 und der Oberfläche 19 des Abdeckteils 15 eine geringfügige, im Millimeterbereich liegende Stufe, die in der Fig. 4 durch die Pfeile 20 angedeutet ist.

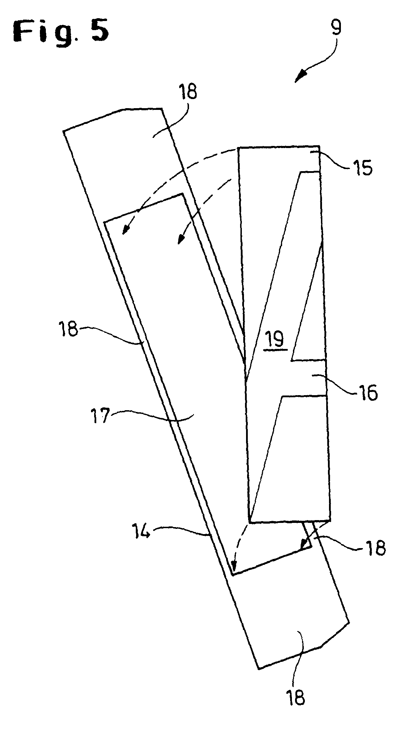

In der Fig. 5 ist eine alternative Ausgestaltung eines Förderbandsegmentes 9 nach der grundsätzlichen Konstruktion des Förderbandsegmentes 9 gemäß den Fig. 3 und 4 dargestellt, wobei das Förderbandsegment 9 nach Fig. 5 eine im wesentlichen rechteckförmige Außenkontur hat.

Das Abdeckteil 15 ist mit dem Tragteil 14 über Nieten verbunden, so daß sich das Abdeckteil 15 nach Lösen dieser nicht näher dargestellten Nieten aus der Vertiefung 17 des Tragteils 14 herausheben läßt. Auf diese Weise kann das Abdeckteil 15 mit der daran angeordneten, die visuelle Information aufweisenden Folie 16 demontiert und gegen ein anderes Abdeckteil 15 ausgetauscht werden, so daß die visuellen Informationen turnusmäßig geändert und damit auf die Bedürfnisse der Werbeindustrie abgestimmt werden können.

Wie aus den Fig. 3 und 5 zu erkennen ist, übergreifen die optischen Informationen mehrere nebeneinander angeordnete und miteinander verbundene Förderbandsegmente 9. So zeigt beispielsweise die Fig. 5 ein Abdeckteil 15, welches eine Folie 16 aufweist, die einen Teil des Buchstaben A zeigt. Zur Komplettierung dieses Buchstaben A befindet sich auf dem nicht dargestellten benachbarten Förderbandsegment bzw. auf den nicht dargestellten benachbarten Förderbandsegmenten das weitere grafische Ausgestaltungsmerkmal, daß den Buchstaben A vervollständigt.

## Patentansprüche

1. Fördereinrichtung, bestehend aus einem angetriebenen Förderband (5), welches eine Vielzahl von einzelnen, miteinander mittelbar oder unmittelbar verbundenen Förderbandsegmenten (9), eine Antriebseinrichtung, insbesondere einen Antriebsmotor mit nachgeschaltetem Getriebe aufweist, welche Förderbandsegmente (9) optische Informationen aufweisen, wobei die Förderbandsegmente mehrteilig ausgebildet sind und zumindest ein Teil (15) des Förderbandsegmentes (9) die optische Information enthält, jedes Förderbandsegment (9) aus einem Tragteil (14) und einem transparenten Abdeckteil (15) besteht und die optische Information zwischen dem Tragteil (14) und dem Abdeckteil (15) angeordnet ist, **dadurch gekennzeichnet, dass** das Abdeckteil (15) mit der optischen Information in einer Ausnehmung, insbesondere einer Vertiefung (17) im Tragteil (14) angeordnet ist, welche Ausnehmung, insbesondere Vertiefung (17) an allen Kanten des Abdeckteils (15) anschliesst und dass die Oberfläche (19) des Abdeckteils (15) geringfügig unterhalb einer durch die Randbereiche (18) des Tragteils (14) definierten Oberflächenebene angeordnet ist.

2. Fördereinrichtung nach Anspruch 1,
**dadurch gekennzeichnet,**
**dass** die optische Information auf einer Folie (16) angeordnet ist.

3. Fördereinrichtung nach Anspruch 1,
**dadurch gekennzeichnet,**
**dass** die optische Information an der dem Tragteil (14) zugewandten Fläche des Abdeckteils (15) angeordnet ist.

4. Fördereinrichtung nach Anspruch 3,
**dadurch gekennzeichnet,**
**dass** die optische Information auf das Abdeckteil (15) in Form eines Farbauftrags aufgebracht ist.

5. Fördereinrichtung nach Anspruch 3,
**dadurch gekennzeichnet,**
**dass** die optische Information auf das Abdeckteil (15) aufgedruckt ist.

6. Fördereinrichtung nach Anspruch 1,
**dadurch gekennzeichnet,**
**dass** das Abdeckteil (15) lösbar am Tragteil (14) befestigt ist.

7. Fördereinrichtung nach Anspruch 6,
**dadurch gekennzeichnet,**
**dass** die Befestigung des Abdeckteils (15) am Tragteil (14) mit Schrauben und / oder Nieten erfolgt.

8. Fördereinrichtung nach Anspruch 6,
**dadurch gekennzeichnet,**
**dass** das Abdeckteil (15) am Tragteil (14) lösbar verklebt ist.

9. Fördereinrichtung nach Anspruch 8,
dass die Verklebung zwischen Abdeckteil (15) und Tragteil (14) in Teilbereichen, insbesondere im Randbereich und / oder punktförmig ausgebildet ist.

10. Fördereinrichtung nach Anspruch 1,
**dadurch gekennzeichnet,**
**dass** die auf einer Folie (16) angeordnete optische Information flächengleich mit dem Abdeckteil (15) ist.

11. Fördereinrichtung nach Anspruch 1,
**dadurch gekennzeichnet,**
**dass** einzelne oder jedes Förderbandsegment (9) mehrere optische Informationen aufweist, bzw. aufweisen.

12. Fördereinrichtung nach Anspruch 1,
**dadurch gekennzeichnet,**
**dass** die optischen Informationen auf die aus einem flexiblen Kunststoff bestehenden Förderbandsegmente (9) vulkanisiert sind.

13. Fördereinrichtung nach Anspruch 1,
**dadurch gekennzeichnet,**
**dass** die optischen Informationen in die Förderbandsegmente (9) eingraviert, eingeätzt, erodiert oder in sonstiger Weise spanabhebend eingearbeitet sind.

## Claims

1. A conveyor device comprised of a driven conveyor belt (5) having a plurality of individual directly or indirectly interconnected conveyor belt segments (9), a driving means, particularly a driving motor with a downstream transmission, said conveyor belt segments (9) including optical information, wherein said conveyor belt segments have a multipart configuration and wherein at least one part (15) of the conveyor belt segment (9) includes the optical information, each conveyor belt segment (9) consisting of a supporting part (14) and a transparent cover part (15), and the optical information being arranged between said supporting part (14) and said cover part (15),
**characterized in**
**that** the cover part (15) with the optical information is arranged in a recess and particularly in a cavity (17) in the supporting part (14), which recess and particularly which cavity (17) join all the edges of the cover part (15), and that the surface (19) of the cover part (15) is arranged slightly below a surface plane which is defined by the rim portions (18) of the supporting part (14).

2. Conveyor device according to claim 1,
that the optical information is arranged on a foil (16).

3. Conveyor device according to claim 1,
**characterized in**
**that** the optical information is arranged on the surface of the cover part facing the supporting part (14).

4. Conveyor device according to claim 3,
**characterized in**
**that** the optical information is applied to the cover part (15) by painting.

5. Conveyor device according to claim 3,
**characterized in**
**that** the optical information is printed onto the cover part (15).

6. Conveyor device according to claim 1,
**characterized in**
**that** the cover part (15) is detachably mounted to the supporting part (14).

7. Conveyor device according to claim 6,
**characterized in**
**that** the mounting of the cover part (15) to the supporting part (14) is done with screws and/or rivets.

8. Conveyor device according to claim 6,
**characterized in**
**that** the cover part (15) is detachably bonded to the supporting part (14).

9. Conveyor device according to claim 8,
**characterized in**
**that** the bonding between the cover part (15) and the supporting part (14) is provided in part-portions, particularly in the rim portion and/or punctually.

10. Conveyor device according to claim 1,
**characterized in**
**that** the optical information arranged on a foil (16) is equal in area with the cover part (15).

11. Conveyor device according to claim 1,
**characterized in**
**that** individual conveyor belt segments or each conveyor belt segment (9) carry/carries plural optical information.

12. Conveyor device according to claim 1,
**characterized in**
**that** the optical information is vulcanized onto the conveyor belt segments (9) which consist of flexible plastic material.

13. Conveyor device according to claim 1,
**characterized in**
**that** the optical information is worked into the conveyor belt segments (9) by means of engraving, etching, eroding or other machining process.

## Revendications

1. Dispositif de transport comportant une bande transporteuse (5) commandée qui présente une multitude de segments de bande transporteuse individuels (9), reliés les uns aux autres de manière indirecte ou directe, un dispositif d'entraînement, en particulier un moteur de commande avec une transmission secondaire, lesquels segments de bande transporteuse (9) présentent des informations optiques, les segments de bande transporteuse étant configurés en plusieurs parties et au moins une partie (15) du segment de bande transporteuse (9) contenant l"nformation optique, chaque segment de bande transporteuse (9) étant constitué par une partie porteuse (14) et une partie de recouvrement transparente (15) et l'information optique étant placée entre la partie porteuse (14) et la partie de recouvrement (15), **caractérisé en ce que** la partie de recouvrement (15) est placée avec l'information optique dans un creux, en particulier un approfondissement (17), dans la partie porteuse (14), lequel creux, en particulier lequel approfondissement (17), se rattachant à toutes les arêtes de la partie de recouvrement (15) et que la surface (19) de la partie de recouvrement (15) est placée légèrement en dessous d'un plan de surface défini par les zones marginales (18) de la partie porteuse (14).

2. Dispositif de transport selon la revendication 1,
**caractérisé en ce**
**que** l'information optique est placée sur une feuille (16).

3. Dispositif de transport selon la revendication 1,
**caractérisé en ce que** l'information optique est placée sur la surface de la partie de recouvrement (15) qui est tournée vers la partie porteuse (14).

4. Dispositif de transport selon la revendication 3,
**caractérisé en ce**
**que** l'information optique est appliquée sur la partie de recouvrement (15) sous forme d'une couche de peinture.

5. Dispositif de transport selon la revendication 3,
**caractérisé en ce**
**que** l'information optique est imprimée sur la partie de recouvrement (15).

6. Dispositif de transport selon la revendication 1,
**caractérisé en ce**
**que** la partie de recouvrement (15) est fixée de manière amovible à la partie porteuse (14).

7. Dispositif de transport selon la revendication 6,
**caractérisé en ce**
**que** la fixation de la partie de recouvrement (15) à la partie porteuse (14) se fait par des vis et/ou des rivets.

8. Dispositif de transport selon la revendication 6,
**caractérisé en ce**
**que** la partie de recouvrement (15) est collée à la partie porteuse (14) de manière amovible.

9. Dispositif de transport selon la revendication 8,
**caractérisé en ce**
**que** le collage entre la partie de recouvrement (15) et la partie porteuse (14) est formé dans des zones partielles, en particulier dans la zone marginale et/ou en forme de points.

10. Dispositif de transport selon la revendication 1,
**caractérisé en ce**
**que** l'information optique placée sur une feuille (16) est de même surface que la partie de recouvrement (15).

11. Dispositif de transport selon la revendication 1,
**caractérisé en ce**
**que** des segments de bande transporteuse (9) individuels présentent plusieurs informations optiques ou chaque segment de bande transporteuse (9) présente plusieurs informations optiques.

12. Dispositif de transport selon la revendication 1,
**caractérisé en ce**
**que** les informations optiques sont vulcanisées sur les segments de bande transporteuse (9) composés d'une matière synthétique flexible.

13. Dispositif de transport selon la revendication 1,
**caractérisé en ce**
**que** les informations optiques sont gravées, gravées à l'eau forte, érodées ou incorporées d'une autre manière par enlèvement de copeaux.
